# EUROPEAN PATENT APPLICATION

(11) **EP 2 189 946 A1**
(43) Date of publication of application: **26.05.2010**
(21) Application number: 08829537.3
(22) Date of filing: 29.08.2008
(51) Int. Cl.: G06T 17/40, G06F 17/50, G06T 15/00

(54) **WEARING SIMULATION DEVICE, WEARING SIMULATION METHOD AND WEARING SIMULATION POGRAM**

(30) Priority: 07.09.2007 JP 2007232719
(71) Applicant: Shima Seiki Manufacturing., Ltd., Wakayama-shi, Wakayama 6410003 (JP)
(72) Inventor: YAMAMOTO, Shinji, Wakayama-shi Wakayama 641-0003 (JP); NISHIKAWA, Tadanori, Wakayama-shi Wakayama 641-0003 (JP); FUKUDA, Tetsuya, Wakayama-shi Wakayama 641-0003 (JP); MORIKI, Hironori, Wakayama-shi Wakayama 641-0003 (JP)
(74) Representative: Wagner, Karl H.
(86) International application number: PCT/JP2008/065528
(87) International publication number: WO 2009/031468

(57) **Abstract**

A garment shape of a non-sewn knitted product is simulated three-dimensionally on a flat plane. The garment is divided into a plurality of parts (110 to 115, 120, 121), which are further divided by meshes to generate polygons (94, 96, 98, 100, 102). The parts (110 to 115, 120, 121) are arranged around a human body model and joined together, and a wearing state is simulated at the polygon level. Next, stitches are arranged with respect to the polygons (94, 96, 98, 100, 102), and the arrangement of the stitches is rectified. Then, the stitches are formed into a three-dimensional shape, and rendering is carried out using a thread image. This increases the simulation speed.

## Description

The present invention relates to a wearing simulation, and particularly to upgrading the simulation speed.

The applicant has proposed a simulation of a natural shape of a knitted fabric using an experimental rule (Patent Document 1: Japanese Patent Application Publication No. 2005-120501). In this simulation, the arrangement of the stitches within a three-dimensional space is obtained based on the experimental rule, such as the types of the stitches or the connection relation among the surrounding stitches. This simulation allows to obtain a three-dimensional shape of a flatly arranged garment.

The applicant has also proposed a simulation of a garment put on a human body model, by expressing the human body model using five axes, legs, torso and arms, and then contracting the garment after initially arranging the garment to surround the five axes (Patent Document 2: Japanese Patent Application Publication No. 2005-240213). However, this method requires a large computational effort, and it is difficult to perform a dialogical simulation. The reasons why it requires a large computational effort are described below:
- In the course of contracting the garment and bringing it close to the human body model, it is necessary to determine, for each stitch of the garment, whether or not a polygon collides with the surface of the human body model; and
- It takes a long time for the arrangement of the stitches to become stable because the simulation is started when the arrangement of the stitches is upset significantly. Therefore, the simulation method needs to be improved so that the simulation can be performed accurately in dialogical time.
   Patent Document 1: Japanese Patent Application Publication No. 2005-120501
   Patent Document 2: Japanese Patent Application Publication No. 2005-240213

An object of the present invention is to enable an accurate simulation of a wearing state a knitted product to be carried out in dialogical time.

In a wearing simulation apparatus that uses design data of a knitted product to simulate, in a three-dimensional space, a state in which a human body model wears the knitted product, the present invention is characterized in having:
a parts joining portion that brings parts, which are arranged virtually around the human body model, close to each other and joins the parts together without causing the parts to collide with the human body model;
means for simulating a three-dimensional shape of the knitted product composed of the joined parts, based on a force acting on polygons rougher than stitches, in units of polygons;
a stitch mapping portion that obtains the three-dimensional shape of the knitted product when the knitted product is worn, by mapping the stitches of the knitted product onto the polygons obtained after the simulation; and
a thread image rendering portion that renders the arrangement of the stitches by using a thread image.

In a wearing simulation method for using design data of a knitted product to simulate in a three-dimensional space a state in which a human body model wears the knitted product, the present invention is characterized in comprising:
bringing parts, which are arranged virtually around the human body model, close to each other and joining the parts together without causing the parts to collide with the human body model;
simulating a three-dimensional shape of the knitted product composed of the joined parts, based on a force acting on polygons rougher than stitches, in units of polygons;
obtaining the three-dimensional shape of the knitted product when the knitted product is worn, by mapping the stitches of the knitted product with respect to the polygons obtained after the simulation; and
rendering the arrangement of the stitches by using a thread image.

In a wearing simulation program that is executed by a digital information processing device and uses design data of a knitted product to simulate, in a three-dimensional space, a state in which a human body model wears the knitted product, the present invention is characterized in having:
a parts joining instruction to bring parts, which are arranged virtually around the human body model, close to each other and join the parts together without causing the parts to collide with the human body model;
an instruction to simulate a three-dimensional shape of the knitted product composed of the joined parts, based on a force acting on polygons rougher than stitches, in units of polygons;
a stitch mapping instruction to obtain the three-dimensional shape of the knitted product when the knitted product is worn, by mapping the stitches of the knitted product with respect to the polygons obtained after the simulation; and
a thread image rendering instruction to render the arrangement of the stitches by using a thread image.

Preferably, in the design data of the knitted product, each of the parts is joined and knitted without being sewed, and the wearing simulation apparatus is further provided with: means for obtaining the three-dimensional shape of the knitted product in an unworn state in which the knitted product is disposed on a flat plane; and
a parts dividing portion that virtually divides the obtained three-dimensional shape into a plurality of parts on simulation data.
More preferably, the parts dividing portion divides the knitted product into at least a front body and a back body by a boundary surface between a surface of the back body and a surface of the front body, with respect to the three-dimensional shape of the knitted product in the unworn state.

The knitted product is preferably a cylindrical garment obtained by joining and knitting the plurality of parts without sewing the parts, but is not limited thereto. For example, in order to simulate the wearing state of a cylindrical garment obtained by sewing and joining a plurality of parts together, the initial shape of each of the parts may be obtained by obtaining a three-dimensional shape of the part while the parts are arranged on a flat plane.

It is preferred that the parts dividing portion obtain an outline of each of the parts based on the positions of the stitches contained in each of the parts of the three-dimensional knitted product in the unworn state.
Preferably, the polygons are arranged along an array direction of the stitches on the design data.
It is preferred that the wearing simulation apparatus be further provided with a rectifying portion that rectifies the arrangement of the mapped stitches.

In this specification, the description of the simulation apparatus applies directly to the descriptions of the simulation method and the simulation program, and the descriptions of the simulation method and the simulation program apply directly to the simulation apparatus.

In the present invention, the wearing state of the knitted product is simulated in units of polygons instead of stitch. The simulation time can be reduced by performing the simulation at the polygon level. The simulation is carried out accurately at the polygon level in consideration of a force applied to the polygons. A three-dimensional arrangement of the knitted product is obtained by mapping the stitches in relation to the polygons obtained after the simulation. Next, the thread image is mapped on the stitches to obtain a simulation image that reflects the thickness and the color tone of the thread.

By obtaining the three-dimensional shape of the unworn knitted product that is disposed in a flat plane, with respect to the design data of the knitted product obtained by joining and stitching the parts without sewing the parts, the three-dimensional shape of the knitted product can be obtained in a short period of time because the human body model is not used. The three-dimensional shape may be obtained easily using an experimental rule based on the arrangement of the stitches or by means of an accurate simulation in consideration of the force acting on the stitches. By dividing the obtained three-dimensional shape into the plurality of parts, the simulation can be started when the stitches are arranged substantially accurately within the parts. Then, how the knitted product is deformed by putting it on the human body model is simulated in units of polygons, and the three-dimensional arrangement of the stitches of the unworn knitted product is used by units smaller than the polygons.

By joining the virtual parts together, an initial arrangement of the knitted product on the human body model can be obtained. This initial arrangement is close to the natural shape than the initial arrangement obtained by expanding the knitted product and then contracting the knitted product toward the human body model. Therefore, the simulation time can be shortened. Furthermore, determination as to whether the stitches collide with the human body model or not can be performed easily by joining the virtual parts together to obtain the initial arrangement. Particularly by dividing the virtual parts by polygons, the collision determination can be performed easily in the course of moving the parts. This is because the number of polygons is lower than the number of stitches.

Note that the plurality of independent parts knitted by means of an integral knitting technique may be sewed and joined together to obtain a knitted product, and the wearing state of the knitted product may be simulated. In this case as well, the simulation can be started with relatively accurate initial data, by obtaining a three-dimensional shape of each part while the parts are arranged on a flat plane.

The parts can be divided based on the design data (knitting data) as well. For example, the knitted product may be divided into parts by using the attribute of the stitches on the knitting data such as a front body, back body, right-side back arm, left-side front arm, and collar. The boundary between the parts may be different from the attributes of the stitches on the knitting data. For example, in a three-dimensional knitted fabric, a back body thereof sometimes passes beyond the shoulders and becomes overlapped with a front body. When a boundary between parts is defined according to the attributes of stitches, it is difficult to manually input a parts boundary. However, when a three-dimensional shape of the unworn knitted product is obtained, and then the middle between a back knitted fabric and a front knitted fabric is obtained as a boundary surface, the boundary between the parts on the front knitted fabric side and on the back knitted fabric side can be input automatically. In this case, the boundary between the parts might be different than the battery obtained by the attributes of the stitches.

Once the division of the knitted product into parts is finished, outlines of the parts are required. It is understood in the course of division into parts which one of the parts contains what kind of stitches. Then, the outlines of the parts can be easily obtained from the positions of the three-dimensional stitches of the unworn knitted product.
When polygons are arranged along an array direction of the stitches on the design data, the regularity of the arrangement of the stitches is reflected on the arrangement of the polygons so that the simulation can be performed easily.
Moreover, when performing the simulation in units of polygons, the polygons deform significantly, especially at a connection between the parts. Therefore, by rectifying the arrangement of the mapped stitches, a more natural arrangement of the stitches can be obtained. This rectification can be executed in a short period of time without taking into consideration the force acting on the stitches.

Fig. 1 is a block diagram of a wearing simulation apparatus according to an embodiment;
Fig. 2 is a flowchart showing a wearing simulation method according to the embodiment;
Fig. 3 is a block diagram of a wearing simulation program according to the embodiment;
Fig. 4 is a diagram showing a series of processes up to the generation of parts in a wearing simulation according to the embodiment;
Fig. 5 is a diagram showing a series of processes from the generation of a mesh polygon up to the end of a simulation at the polygon level, in the wearing simulation according to the embodiment;
Fig. 6 is a diagram showing a series of processes from mapping stitches up to smoothing the arrangement of the stitches in the wearing simulation according to the embodiment;
Fig. 7 is a diagram showing from loop creation to rendering in use of a thread image;
Fig. 8 is a diagram showing a loop model expressing the stitches in the embodiment;
Fig. 9 is a diagram showing control points and apexes of a polygon in the loop model shown in Fig. 8;
Fig. 10 is a diagram showing deformation of the polygon and movement of the stitches caused by performing a simulation at the polygon level;
Fig. 11 is a block diagram showing a series of processes from parts division up to polygon generation according to the embodiment;
Fig. 12 is a diagram showing an unworn state simulation image in a state where a knitted product is disposed on a flat plane;
Fig. 13 is a diagram showing a simulation result obtained in the embodiment using the simulation image of Fig. 12, along with a garment and a human body model;
Fig. 14 is a diagram showing the simulation result of Fig. 13 with a different viewpoint without the human body model;
Fig. 15 is a diagram showing a simulation of a one-piece suit; and
Fig. 16 is a diagram showing a simulation of a molded and weaved garment or a garment using a woven fabric.

- 2: Wearing simulation apparatus
- 4: Manual input
- 6: Data input/output
- 8: Program memory
- 10: Color monitor
- 12: Color printer
- 14: Design data storage unit
- 16: Image data storage unit
- 18: Knit design portion
- 20: Data converter
- 22: Thread image input portion
- 23: Three-dimensional unworn state simulation portion
- 26: Parts division portion
- 28: Polygon generation portion
- 30: Parts joining portion
- 32: Polygon level simulation portion
- 34: Three-dimensional mapping portion
- 36: Rectifying portion
- 38: Stitch shape mapping portion
- 40: Thread image rendering portion
- 42: Wearing simulation program
- 44: Three-dimensional unworn state simulation instruction
- 46: Parts division instruction
- 48: Polygon generation instruction
- 50: Parts joining instruction
- 52: Polygon level simulation instruction
- 54: Three-dimensional stitch mapping instruction
- 56: Rectification instruction
- 58: Stitch shape mapping instruction
- 60: Thread image rendering instruction
- 62 to 92: Three-dimensional image data
- 94, 96, 98: Polygons
- 95: Polygon center
- 100, 102: Polygons
- 110 to 115: Parts
- 120, 121: Parts
- 122, 123: Sewing portion
- 124: Knitted product simulation image
- 126: Woven fabric simulation image
- 128: Thread image

The best mode for carrying out the present invention is described hereinafter. Embodiment

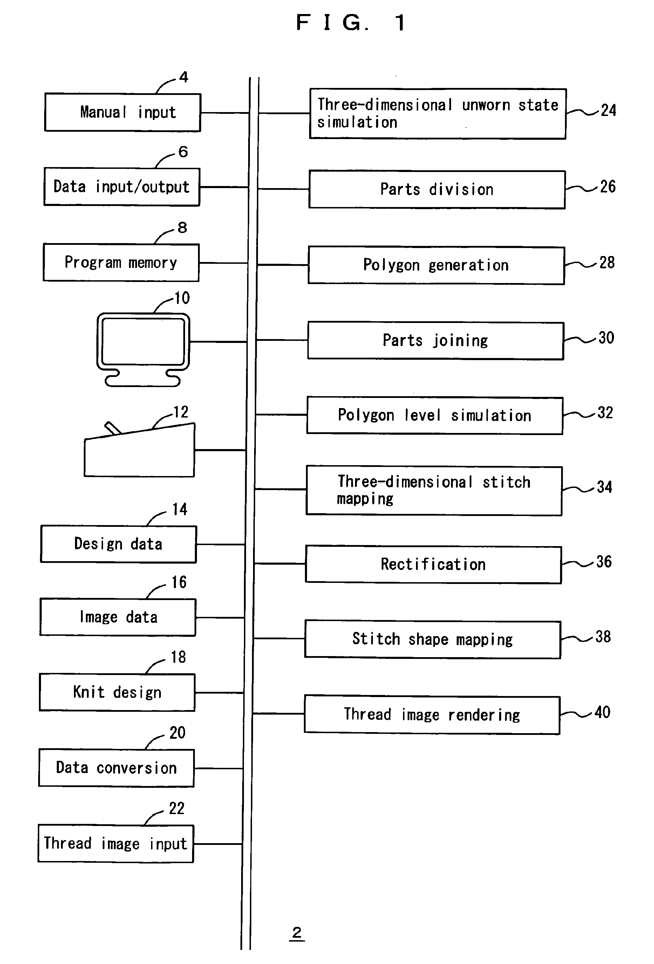

Figs. 1 to 16 show an embodiment. In Fig. 1, reference numeral 2 represents a wearing simulation apparatus, and 4 a manual input, such as a keyboard, stylus, trackball, and joystick. Reference numeral 6 represents a data input/output such as a disc driver or a network interface used for inputting/outputting image data. Reference numeral 8 is a program memory for storing a wearing simulation program. Reference numeral 10 is a color monitor for displaying a simulation result, and 12 a color printer for color-printing the simulation result.

Reference numeral 14 represents a design data storage unit for storing design data of a knitted product, and knitting data for a knitting machine, which is obtained by converting the design data. Reference numeral 16 represents an image data storage unit for storing various image data obtained during a simulation step, and image data of the simulation result. Reference numeral 18 is a knit design portion used for designing a knit product in accordance with an input from the manual input 4 or the data input/output 6. A knitted product composed of a non-sewn cylindrical knitted fabric is assumed as the knit product here, but a knitted product obtained by joining sleeves, a front body, a back body and other parts together may be used. A data converter 20 converts the design data of the knitted product into knitting data that can be knitted by the knitting machine. A thread image input portion 22 is configured by, for example, a scanner, and inputs a color image of a thread. The input thread image may be a two-dimensional image or a three-dimensional image.

A three-dimensional unworn state simulation portion 24 uses an arrangement of stitches specified by the knitting data or the design data, to simulate a three-dimensional shape obtained by arranging the knitted product on a flat plane. This simulation is carried out by starting from the initial arrangement where stitches are arrayed at an interval of, for example, one stitch, and adding, between the back knitted fabric and the front knitted fabric of the cylindrical knitted fabric, a stress generated by contraction between the stitches, repulsion force generated from a flat surface, and gravity on the knitted fabric. The flat surface is not necessarily a horizontal surface. In an extreme case, an upward supporting force may be added from above the cylindrical knitted fabric to balance the supporting force with the gravity acting on the knitted product. Instead of the simulation in which the physical forces are added, a simulation may be performed to obtain a three-dimensional shape of the knitted fabric by means of experimental rules, such as contraction, deformation, uplift and subduction of the stitches, which are resulted from the type of the stitches and the connection relation among the surrounding stitches. The three-dimensional unworn state simulation portion 24 obtains the three-dimensional shape of the unworn knitted product.

A parts division portion 26 divides the knitted product into a plurality of parts. The knitted product can be divided automatically in accordance with the attributes of the stitches, such as the front body, back body, right-side front sleeve and left-side back sleeve. In addition, a simulation image of the unworn knitted product can be displayed on a color monitor 10, and a boundary between the parts can be input from the manual input 4. In the present embodiment, the stitch arrangement obtained in the three-dimensional simulation of the unworn knitted product is divided into two parts, the front knitted fabric and the back knitted fabric, by the boundary surface between the part on the front knitted fabric side and the part on the back knitted fabric side. Next, the attributes of the stitches are used, or if there are marks on the knitting data indicating the armpits or shoulder lines, the marks are used to divide the front and back knitted fabrics into the parts. The division lines of the parts may be specified manually. A polygon generation portion 28 divides each of the parts into a plurality of polygons. The size of each polygon is larger than the size of each stitch, and each polygon basically contains a plurality of stitches. Sometimes in the vicinity of the outline of each part, there is only one stitch in one polygon.

A parts joining portion 30 brings the parts arranged virtually around the human body model close to each other, and joins the parts together. As a result, an initial state in which the human body model wears the cylindrical knitted fabric can be obtained. A polygon level simulation portion 32 uses the polygons to perform a physical simulation on data obtained after joining the parts together. In this case, a stress generated by deformation of the polygons, gravity acting on the polygons, and frictional force or repulsion force between the human body model and the knitted fabric are added to carry out the physical simulation. Then, as is well known, the simulation is repeated until the arrangement of the polygons converges.

A three-dimensional mapping portion 34 maps the stitches onto the polygons after the simulation to define a three-dimensional arrangement of the stitches. A rectifying portion 36 rectifies the arrangement of the mapped stitches. A stitch shape mapping portion 38 maps a three-dimensional shape of each stitch onto the individual stitches obtained after the rectification. A thread image rendering portion 40 uses a thread image to render the three-dimensional shape of the mapped stitches, and generates a final simulation image. Prior to the rendering process using the thread image, it is possible to display an image of a thread expressed by a napless tube or particularly a one-colored tube with no texture. In this manner, the simulation image obtained prior to the rendering process can be created in a short period of time. The wearing simulation apparatus 2 is provided additionally with functions of transforming or reducing/enlarging the viewpoint and of changing the knit design from the simulation image.

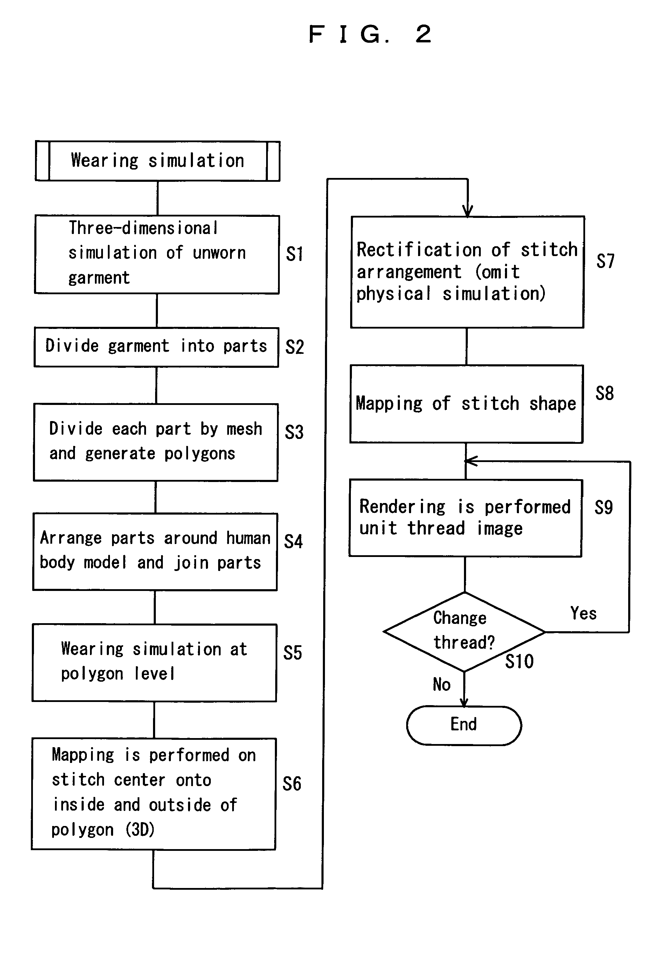

Fig. 2 shows a wearing simulation method according to the present embodiment. In step 1, an unworn garment is three-dimensionally simulated. In step 2, the garment is divided into a plurality of parts. In step 3, each of the parts is divided by a mesh to generate the polygons. In step 4, the parts are arranged around the human body model and joined together. In step 5, a wearing simulation is carried at the polygon level. In step 6, the stitches are mapped onto the inside and outside of each polygon. More precisely, reference points of the stitches are mapped. In this mapping, the stitches are mapped with respect to a three-dimensional space in which the polygons are arranged. In step 7, the stitch arrangement is rectified. That is, preferably, the physical simulation is not carried out at this moment, but simply the rectification is performed by adopting the abovementioned experimental rules with respect to the intervals between the stitches, orientation of the stitches, and uplift or subduction of the stitches. In step 8, the three-dimensional shape of each stitch is mapped. In step 9, the thread image is used to render the stitch arrangement, and, when changing the thread (step 10), the process is returned to step 9.

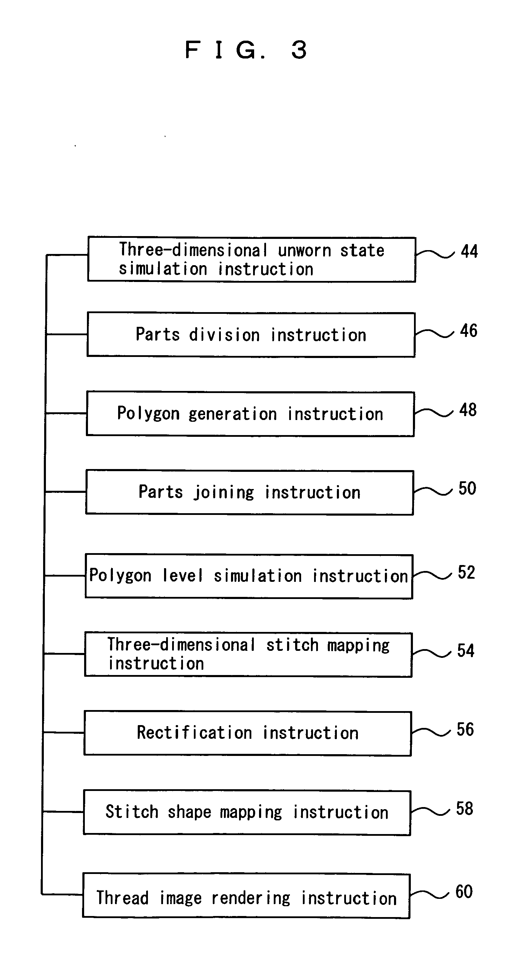

Fig. 3 shows a wearing simulation program 42 according to the embodiment. The program 42 is stored in the program memory 8 of the wearing simulation apparatus 2 configured by computer, executed, and then supplied to the wearing simulation apparatus 2 via an appropriate storage medium or carrier wave. The program 42 carries out the wearing simulation by means of the wearing simulation apparatus 2 serving as a digital information processing device. A three-dimensional unworn state simulation instruction 44 simulates a stable shape when the non-sewn cylindrical knitted fabric is disposed on a flat plane. A parts division instruction 46 divides the simulated unworn knitted fabric into a plurality of parts. A polygon generation instruction 48 divides each of the parts into polygons larger than stitches. A parts joining instruction 50 joints the plurality of parts together.

A polygon level simulation instruction 52 simulates a wearing state of the knitted product at the polygon level. A three-dimensional stitch mapping instruction 54 maps the arrangement of the stitches onto the polygons obtained after the simulation, in the three-dimensional space. A rectification instruction 56 rectifies the arrangement of the mapped stitches. A stitch shape mapping instruction 58 maps the shape of each stitch onto the rectified stitch arrangement. Then, a thread image rendering instruction 60 renders the shape of each stitch using the thread image.

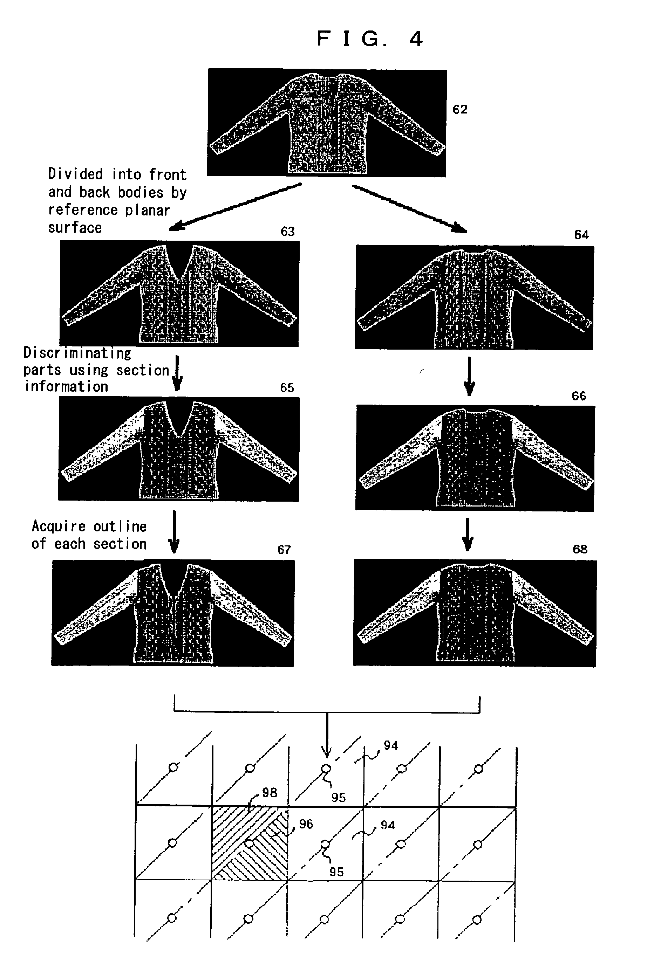

Figs. 4 to 11 show specific examples of the simulation. Reference numerals 62 to 92 represent three-dimensional image data. The data 62 represents simulation data obtained when the knitted product is not worn. The data 63, 64 are obtained by dividing the simulation data into front and back portions by a reference planar surface between the front knitted fabric and the back knitted fabric. Next, the data 65, 66 are obtained by dividing each stitch into parts based on the marks within the knitting data, such as the marks indicating the armpits and wrists. In this manner, each stitch is sorted into any of the parts, and the data 67, 68 are obtained by acquiring the outline of each of the parts from three-dimensional coordinates of the stitches within each part.

Next, each part is divided into polygons. When dividing each part into polygons, for example, a mesh having longitudinal and lateral directions is used, wherein the longitudinal and lateral directions of the mesh are parallel to a course direction and wale direction of the knitted fabric. The mesh is configured by the arrows shown by the data 67, 68 in the case of the sleeves, and a direction perpendicular to these arrows. In the case of the bodies, the mesh having vertical and horizontal directions of the data 67, 68 is generated. A polygon 94 is obtained by using the mesh directly as a polygon. Note that reference numeral 95 is the polygon center of the polygon 94. When a triangular polygon is preferred, polygons 96, 98 are obtained by dividing the polygon 94 into two parts, but a triangular polygon is used in the present embodiment.

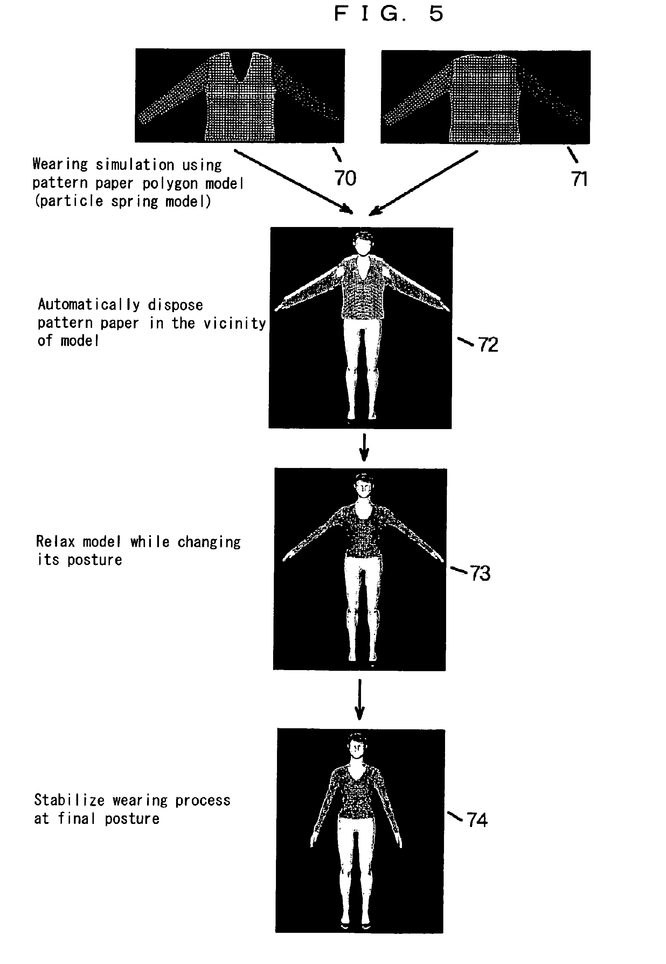

Data 70, 71 shown in Fig. 5 show an arrangement of the polygons in relation to the knitted product. Data 72 is obtained by arranging, in the human body model, the parts configured in units of polygons. Because the parts are divided by the boundary, such as an armpit, upper line of a sleeve or a shoulder line, so as to be accommodated easily to the human body model, the parts can be arranged easily in relation to the human body model. Subsequently, data 73, 74 are obtained by executing a simulation in units of polygons. Note that the arms of the human body model are opened in the data 72 so that the parts can be arranged easily, but the arms of the human body model are lowered in the course of the simulation. The posture of the human body model is close to a natural posture in the data 74.

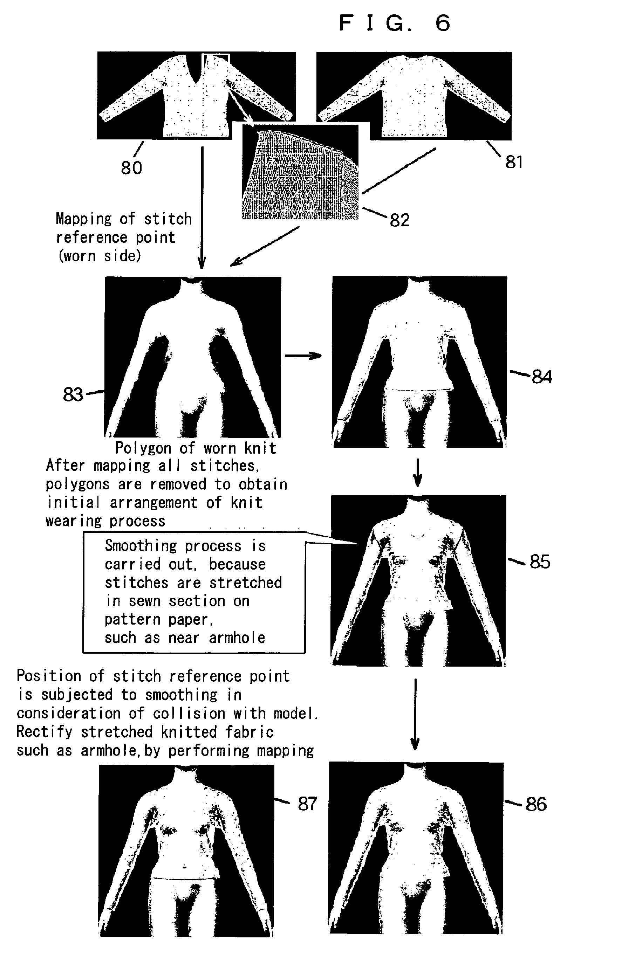

Data 80 to 82 shown in Fig. 6 are data obtained before the simulation is performed in units of polygons and represent the arrangement of the polygons and stitches. The white dots shown in the data 80, 81 express the polygons, the bright dots shown in data 82 the polygons, and the dark dots the stitches. The data obtained after the simulation is performed in units of polygons is expressed by a reference numeral 83. By mapping the reference points of the stitches onto the polygons, data 84 is obtained. Next, the polygons are deleted, and the degree of contraction between the stitches that is obtained by the simulation at the polygon level is displayed in grayscale to obtain data 85. For data 85, data 86 is obtained by rectifying the stitch arrangement so as to reduce the contraction between the polygons. For data 86, data 87 is obtained by eliminating the grayscale resulted by the contraction between the stitches.

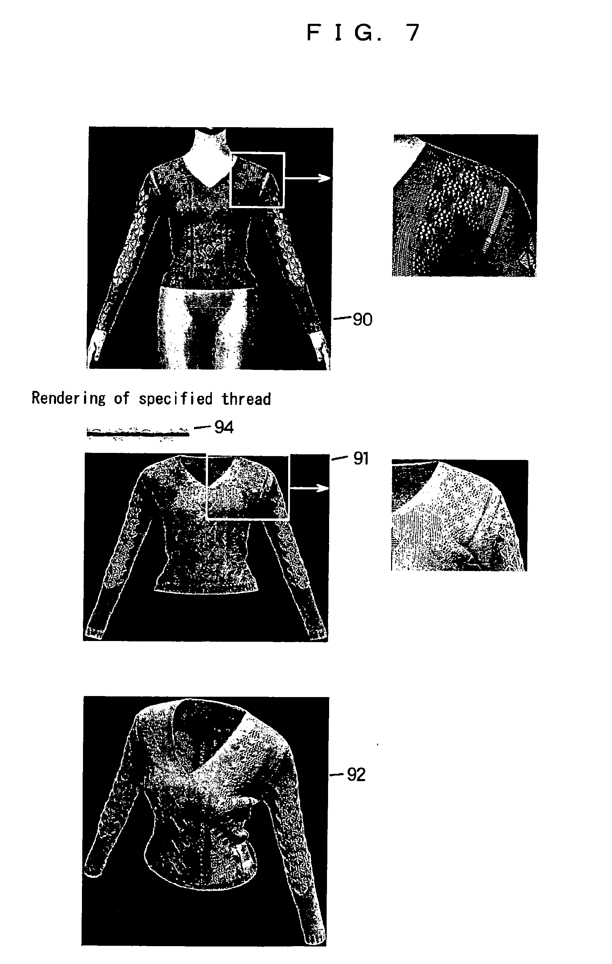

Data 90 shown in Fig. 7 is obtained by mapping the shape of the stitches onto the stitch arrangement in the data 87, and a part of the data 90 is expanded and shown on the right-hand side. Next, three-dimensional image data 91, 92 are obtained by rendering the switches using a thread image 94, and a part of the image data 91 is expanded and shown on the right-hand side. Note that the human body model is omitted from the display, but the human body model may be added.

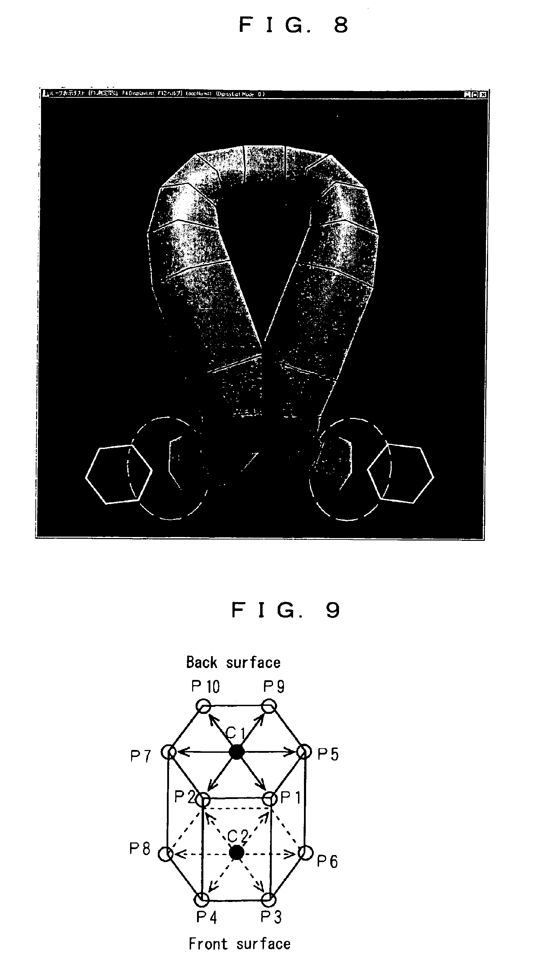

Figs. 8 and 9 show models of the shape of the stitches. Each of the stitches is in the form of a tube a cross-sectional shape of which is a square or hexagon, wherein the position on, for example, the base part side of the stitch is the reference point. The shape of the stitch is defined by a plurality of control points C1, C2 shown in Fig. 9. The control points are located at the boundary between polygonal cylindrical pipes shown in Fig. 8. For example, six polygons are obtained per pipe by specifying apexes P1 to P10 on each pipe shown in Fig. 8, and, for example, twelve polygons are obtained per pipe when the shape of each polygon is a triangular shape. Then, the rendering is carried out by texture-mapping the thread image on the surfaces of the polygons shown in Figs. 8 and 9, or adding polygons corresponding to the nap on the thread image to the polygons shown in Figs. 8 and 9 The rendering using the thread image can be performed at various levels. When performing precise rendering, the shape of the stitches is composed of the control points shown in Fig. 9, and the thread image is composed of a tube of the thread main body and a tube of the nap. The tube of the thread main body is disposed along the control points, and the tube of the nap is disposed around the thread of the main body. When performing simple rendering, the tube configuring the stitches in Fig. 8 is converted into a two-dimensional image to be displayed, and the image of the thread main body is subjected to texture mapping to map the image of the nap around the image of the thread main body.

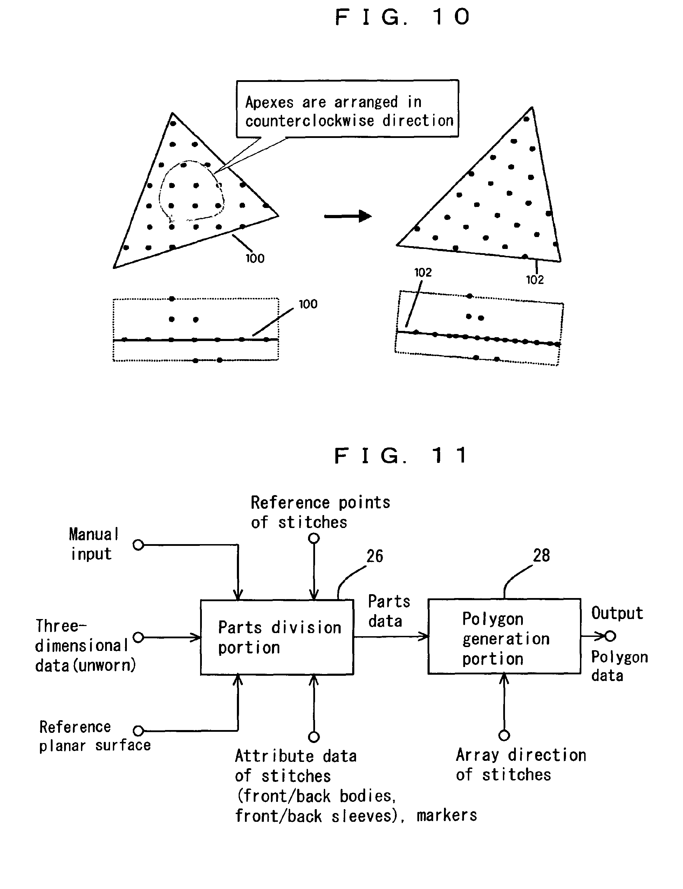

Fig. 10 shows how the stitches are mapped three-dimensionally on the polygons. In the present embodiment, the apexes of the polygons are arrayed in a counterclockwise direction, and the stitches are disposed on a polygon 100 before the simulation is performed, as shown by the black points. The shape of the polygon is changed by performing the simulation, as shown by reference numeral 102 in the diagram, and the orientation of the polygon is displaced from the horizontal surface. Then, the arrangement of the stitches is mapped on the deformed polygon based on the arrangement of the stitches on the original polygon obtained before being deformed.

Fig. 11 shows how the parts are divided and the polygons are generated. The three-dimensional simulation data obtained when the knitted product is not worn is input to the parts division potion 26, and the knitted product is divided into two parts, front and back portions, by the reference planar surface between the front knitted fabric and the back knitted fabric. Next, the parts are divided into, for example, the sleeves and bodies by the marks on the armpits or shoulder lines. The attribute data of the stitches may be used for dividing the knitted product into the sleeves and bodies. Moreover, the parts may be divided manually. The knitted product may be divided depending on the type of the stitches to obtain a hem rubber and the bodies as separate parts. Then, the outlines of the parts are obtained from the coordinates of the reference points of the stitches on the three-dimensional data. In this manner, a list of the outlines of the parts and the stitches contained in each part is obtained and input as parts data into the polygon generation portion 28. Because the stitches are disposed in a regular manner in each part, the polygon is disposed based on the array direction of the stitches to output polygon data. The detail of the polygon data is a list of the coordinates of the apexes of the polygon, the normal vector of the polygon, the stitches contained in the polygon, and the positions of the stitches relative to the polygon. Furthermore, when generating the polygon, the polygons outside the parts are expanded to be slightly larger than the outlines of the parts so as not to generate any stitches that do not belong to any polygons.

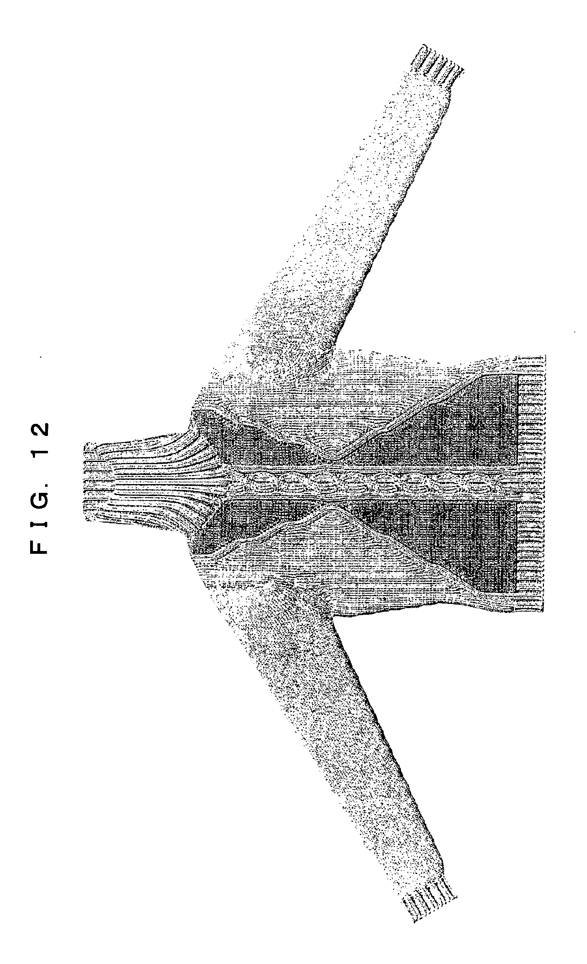

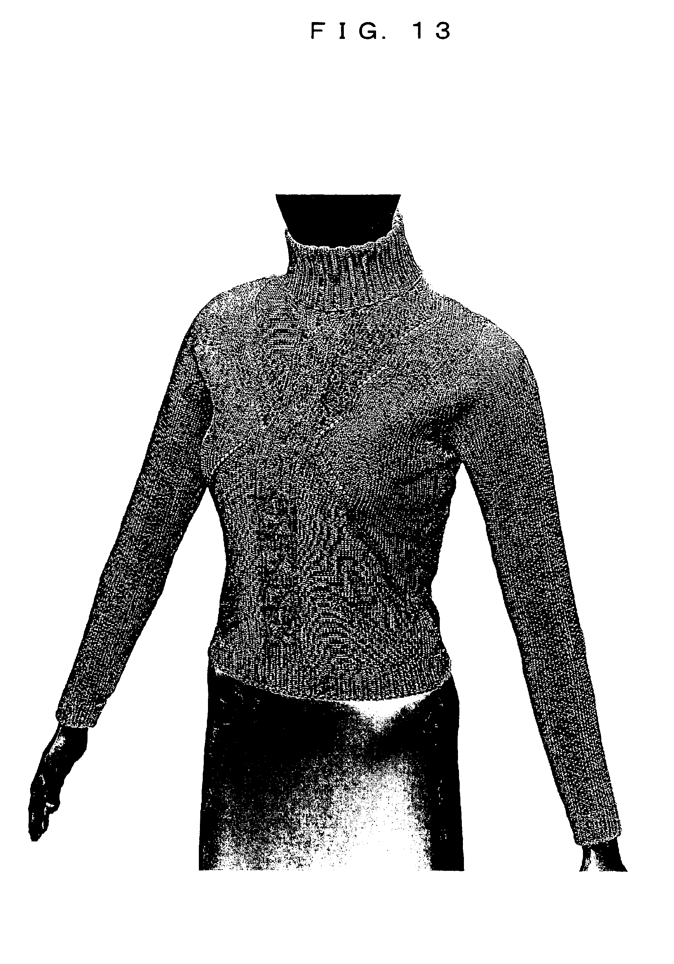

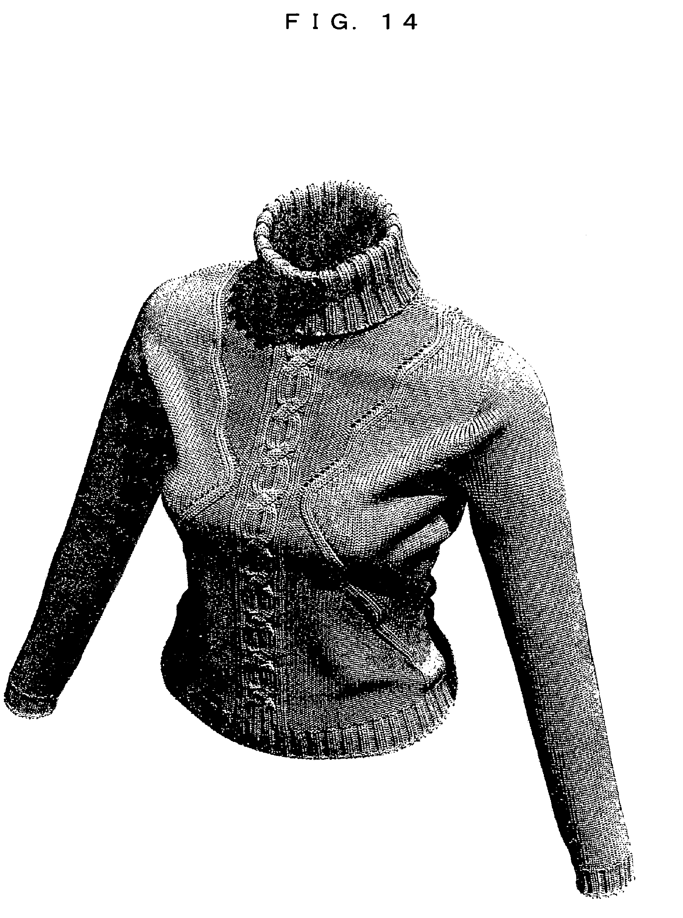

Figs. 12 to 14 show the results of a simulation performed on a sleeved sweater. Fig. 12 shows the results of the simulation obtained when the virtual sweater is disposed on a flat plane. Fig. 13 shows the results of the simulation obtained after this virtual sweater is put on the human body model. Fig. 14 is a diagram that displays the results of the simulation obtained when the human body model is removed from the wearing state, in which the shading is increased.

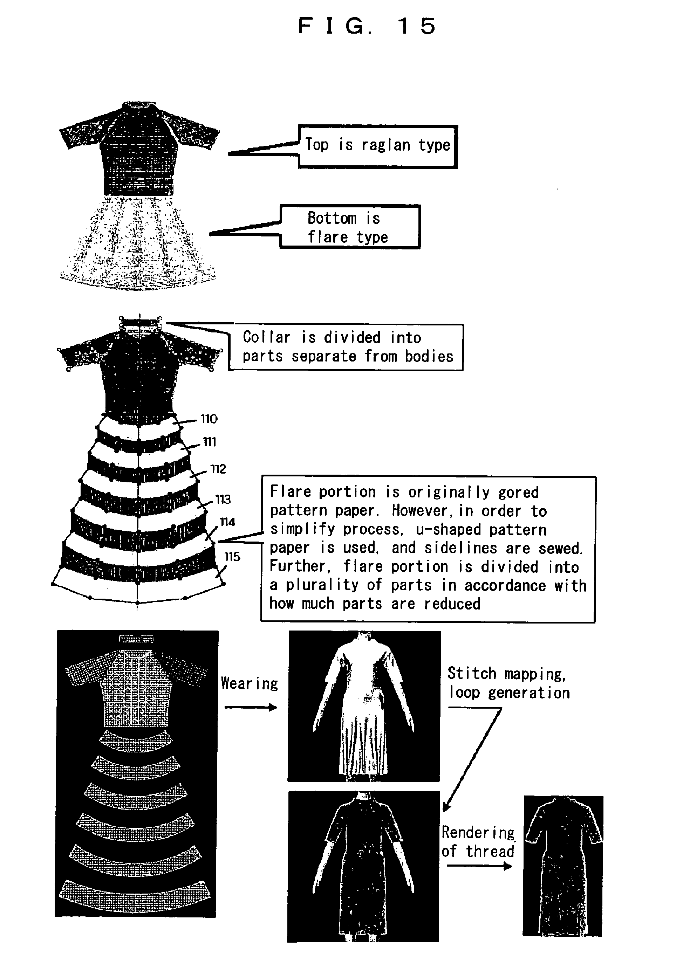

Fig. 15 shows an example of a simulation of a one-piece suit. For example, the bottom of a flare-type one-piece dress is divided into six parts 110 to 115, and the wearing simulation described above is performed, whereby the results shown at the lower right in the diagram are obtained. An appropriate simulation can be carried out even when the flare is divided into the part 110 to 115. Therefore, the divided parts may have shapes different from those predicted from design data.

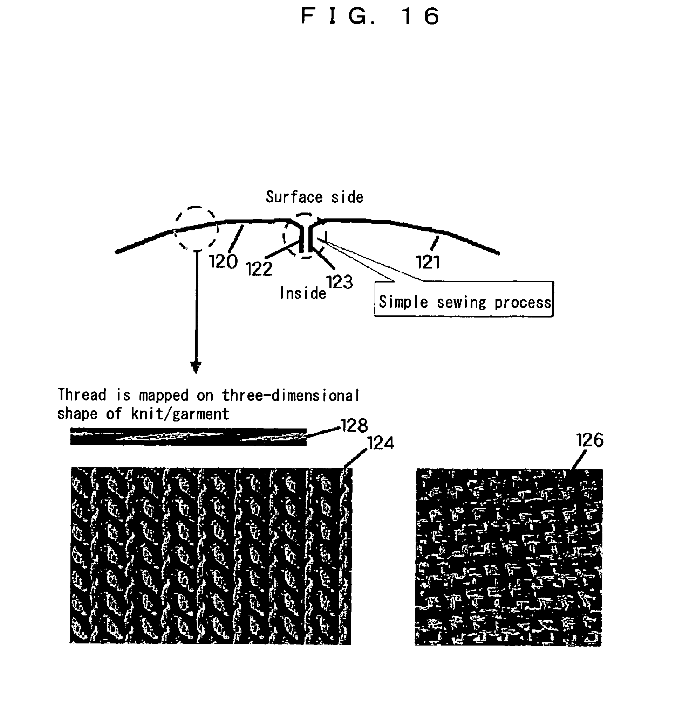

Fig. 16 shows an example of a simulation performed on a knitted product obtained by sewing. Reference numerals 120, 121 represent parts, and reference numeral 122, 123 represent sewing portions. The parts are joined together by sewing the sewing portions 122, 123 to perform a simulation in units of polygons. A simulation image 124 of the knitted product is obtained by mapping the stitches, rectifying the stitch arrangement, mapping the shape of the stitches, and rendering the stitch arrangement by using a thread image. Note that the polygons are configured by a woven fabric instead of a knitted fabric, and each polygon has seams therein, whereby a simulation image 126 is obtained. Reference numeral 128 is a thread image.

The following effects are achieved by the present embodiment.
1) A stable shape of an unworn garment is simulated within a three-dimensional space. Most of the contraction between stitches, uplift and subduction of the stitches, and deformation of the stitches caused by the subduction thereof can be reflected in the simulation.
2) The garment is divided into a plurality of parts and is put on the human body model by joining the parts together. Therefore, the garment can be prevented from deforming significantly in this process, and the garment can be put on the human body model so as to keep the three-dimensional arrangement of the stitches obtained in 1).
3) By using the process performed in 2), where in the circumference of the human body model to dispose the individual stitches can be calculated easily. For example, determination as to which polygon of the human body model collides with the stitches can be eliminated substantially.
4) A physical simulation after joining the parts is carried out in units of polygons using polygons rougher than the stitches. Therefore, the physical simulation can be performed simply, and the shape of the garment that is already put on the human body model can be simulated accurately in units of polygons by means of the polygons rougher than the stitches. Note that the three-dimensional arrangement of the stitches within each polygon has been simulated in 1).
5) By joining the parts expressed by the polygons, it becomes easy to carry out the process related to the collision between the human body model and the parts that is caused by the movement of the parts when the parts are joined together.
6) By rectifying the stitch arrangement after performing the simulation in units of polygons, distortion of the stitch arrangement caused by a joining portion between the parts can be eliminated.
7) The stitch arrangement is rectified, and thereafter the stitches are replaced from the points within the three-dimensional space by threads expressed by a pipe or a row of control points, whereby the data serving as the basis of the rendering process can be obtained.
8) After the process described in 7) is performed, a thread image is used for rendering the stitch arrangement, whereby a final simulation image is obtained. When changing the threads, only the process described in 8) may be executed again.

## Claims

1. A wearing simulation apparatus for simulating a wearing state of a knitted product put on a human body model, in a three-dimensional space, using design data of the knitted product,
the wearing simulation apparatus being **characterized by**:
a parts joining means for bringing parts, arranged virtually around the human body model, close to each other and joining the parts together without causing the parts to collide with the human body model;
means for simulating a three-dimensional shape of the knitted product composed of the joined parts, by calculating forces acting on polygons in units of polygons rougher than stitches;
a stitch mapping means for mapping the stitches of the knitted product onto the polygons obtained after the simulation so as to obtain the three-dimensional shape of the knitted product when the knitted product is worn; and
a thread image rendering means for rendering the arrangement of the stitches by using a thread image.

2. The wearing simulation apparatus according to claim 1, **characterized in that**, in the design data of the knitted product, each of the parts is joined and knitted without being sewed,
the wearing simulation apparatus further comprising:
means for obtaining the three-dimensional shape of the knitted product in an unworn state in which the knitted product is disposed on a flat plane; and
a parts dividing means for virtually dividing the obtained three-dimensional shape into a plurality of parts on simulation data.

3. The wearing simulation apparatus according to claim 1, **characterized by** the knitted product being obtained by joining the plurality of parts by sewing the parts, and
the wearing simulation apparatus further comprising means for obtaining a three-dimensional shape of each of parts while the parts of the knitted product are arranged on the flat plane.

4. The wearing simulation apparatus according to claim 2, **characterized in that** the parts dividing means for dividing the knitted product into at least a front body and a back body by a boundary surface between a surface of the back body and a surface of the front body, with respect to the three-dimensional shape of the knitted product in the unworn state.

5. The wearing simulation apparatus according to claim 2, **characterized in that** the parts dividing means for obtaining an outline of each of the parts based on the positions of the stitches contained in each of the parts of the three-dimensional knitted product in the unworn state.

6. The wearing simulation apparatus according to any one of claims 1 to 5, **characterized in that** the polygons are arranged along an array direction of the stitches on the design data.

7. The wearing simulation apparatus according to any one of claims 1 to 5, **characterized in** further comprising a rectifying means for rectifying the arrangement of the mapped stitches.

8. A wearing simulation method for simulating a wearing state of a knitted product put on a human body model, in a three-dimensional space, using design data of the knitted product,
the wearing simulation method being **characterized by**:
bringing parts, arranged virtually around the human body model, close to each other and joining the parts together without causing the parts to collide with the human body model;
simulating a three-dimensional shape of the knitted product composed of the joined parts, based on a force acting on polygons rougher than stitches, in units of polygons;
obtaining the three-dimensional shape of the knitted product when the knitted product is worn, by mapping the stitches of the knitted product with respect to the polygons obtained after the simulation; and
rendering the arrangement of the stitches by using a thread image.

9. A wearing simulation program executed by a digital information processing device for simulating a wearing state of a knitted product put on a human body model, in a three-dimensional space, using design data of the knitted product,
the wearing simulation program being **characterized by**:
a parts joining instruction to bring parts, arranged virtually around the human body model, close to each other and join the parts together without causing the parts to collide with the human body model;
an instruction to simulate a three-dimensional shape of the knitted product composed of the joined parts, based on a force acting on polygons rougher than stitches, in units of polygons;
a stitch mapping instruction to obtain the three-dimensional shape of the knitted product when the knitted product is worn, by mapping the stitches of the knitted product with respect to the polygons obtained after the simulation; and
a thread image rendering instruction to render the arrangement of the stitches by using a thread image.
